# EUROPÄISCHE PATENTSCHRIFT

(11) **EP 0 763 248 B1**
(45) Veröffentlichungstag und Bekanntmachung des Hinweises auf die Patenterteilung: **11.03.1998**
(21) Anmeldenummer: 95920739.0
(22) Anmeldetag: 29.05.1995
(51) Int. Cl.: H01H 33/66

(54) **ISOLIERTRÄGER FÜR VAKUUMSCHALTRÖHREN**
INSULATING SUPPORT FOR VACUUM SWITCH TUBES
SUPPORT ISOLANT POUR TUBES INTERRUPTEURS A VIDE

(30) Priorität: 30.05.1994 DE 9409006 U
(43) Veröffentlichungstag der Anmeldung: 19.03.1997
(73) Patentinhaber: SIEMENS AKTIENGESELLSCHAFT, 80333 München (DE)
(72) Erfinder: RÖHLING, Christoph, D-10557 Berlin (DE); SIGUSCH, Claudia, D-13585 Berlin (DE); STEINEMER, Norbert, D-14612 Falkensee (DE)
(86) Internationale Anmeldenummer: DE9500708
(87) Internationale Veröffentlichungsnummer: WO9533272

(56) Entgegenhaltungen:
- EP-A- 0 564 057
- WO-A-93/20571
- DE-A- 3 323 861
- DE-U- 9 409 006

## Beschreibung

Die Erfindung betrifft Isolierträger für Vakuumschaltröhren mit Antriebseinrichtungen zum Einbau in Schaltanlagen, insbesondere in gasgefüllte Behälter.

Die Vakuumschaltröhren sind bisher, wie aus der DE 42 11 154 bekannt, zwischen oberen und unteren Isolierplatten angeordnet, die mittels Haltegliedern direkt an die Front- und Rückwand der in den Schaltanlagen befindlichen Behälter befestigt sind. Die konstruktive Ausgestaltung der Isolierträger ist somit unmittelbar abhängig von den räumlichen Gegebenheiten der Behälter. Bereits geringfügige räumliche Veränderungen bedingen unmittelbare konstruktive Anpassungsveränderungen der Isolierplatten und/oder deren Halteglieder. Die der Erfindung zugrundeliegende Aufgabe besteht darin, die Anordnung der Vakuumschaltröhre so zu gestalten, daß die konstruktiven Anpassungsveränderungen möglichst vermieden sind und insbesondere die Montage und der Einbau der Vakuumschaltröhren in die Behälter erheblich vereinfacht ist. Erfindungsgemäß wird dies durch die Merkmale
1.1. der Isolierträger besteht aus einem flachbettartigen Kunststoffprofil mit einer annähernd rechtwinkligen Längsseitenbegrenzung,
1.2. das flachbettartige Kunststoffprofil weist an einem ersten mit der Schaltanlage lösbar verbindbaren Ende ein zur Längsebene nach Innen gekröpftes, an das Außenprofil der Antriebseinrichtung der Vakuumschaltröhre angepaßtes Umschließungsprofil auf, daß mit einem zur Längsebene rechtwinklig verlaufenden, ersten Befestigungsschenkel abschließt,
1.3. das flachbettartige Kunststoffprofil (2) weist an einem zweiten, mit einem Radiallager der Vakuumschaltröhre lösbar verbindbaren Ende ein zum ersten Befestigungsschenkel entgegengesetzt verlaufenden zweiten Befestigungsschenkel auf, der im Längsmittenbereich des Isolierträgers mit dem flachbettartigen Kunststoffprofil abschließt,
1.4. der erste Befestigungsschenkel weist jeweils zwei längsmittensymmetrisch angeordnete erste Schraubenlager und der zweite Befestigungsschenkel weist jeweils zwei längsmittensymmetrisch angeordnete weitere Schraubenlager auf,
1.5. der Isolierträger weist im Innenbereich längsmittig zwei nebeneinander angeordnete zweite Schraubenlager auf, erreicht.

Mit dem flachbettartigen Kunststoffprofil mit seiner annähernd rechtwinkligen Längsseitenbegrenzung ist erreicht, daß mit zwei sich spiegelbildlich gegenüberliegend montierten Isolierträgern ein Zwischenraum gebildet ist, zwischen den Radial- und Stützlager für die Vakuumschaltröhren angeordnet sein können. Beide Isolierträger sind mit ihren ersten Befestigungsschenkel über die ersten Schraubenlager fest mit dem Behälter bzw. mit einem Teil des Behälters verbunden, während der zweite Befestigungsschenkel mit den weiteren Schraubenlagern der Aufnahme eines Radiallagers der Vakuumschaltröhre dient. Mit dieser Anordnung der Vakuumschaltröhren zwischen den spiegelsymmetrisch gegenüberliegenden Isolierträgern ist erreicht, daß die Anordnung derselben innerhalb der Behälter von der räumlichen Ausgestaltung weitestgehend unabhängig ist. Die Konstruktion der Isolierträger kann also für die unterschiedlichsten Behälterausgestaltungen eingesetzt werden, ohne jeweils erneut an die räumlichen Verhältnisse angepaßt werden zu müssen.

Gemäß einer vorteilhaften Ausgestaltung der Erfindung ist vorgesehen, das Umschließungsprofil trapezförmig auszubilden. Mit dieser trapezförmigen Ausbildung des Umschließungsprofils wird dem Isolierträger insgesamt eine große Steifigkeit verliehen.

Eine weitere vorteilhafte Ausgestaltung der Erfindung sieht vor, die ersten und die zweiten Schraubenlager des Isolierträgers durch Schraubenschaft halbumschießende Anschlagstücke zu realisieren, so daß sowohl die Montage mit dem Behälter als auch die Anbringung der entsprechenden Lager für die Vakuumschaltröhren in einfacher Weise erfolgen kann. Fertigungsbedingte Maßtoleranzen können durch entsprechende Lagekorrekturen der Vakuumschaltröhren durch die Anschlagstücke einfach ausgeglichen werden.

Die Erfindung wird durch ein in drei Figuren dargestelltes Ausführungsbeispiel näher erläutert, wobei die Figur 1 die drei technischen Ansichten eines Isolierträgers zeigt, während die Figuren 2 und 3 die Profilstrukturen des Isolierträgers an zwei bevorzugten Schnittstellen herausstellt.

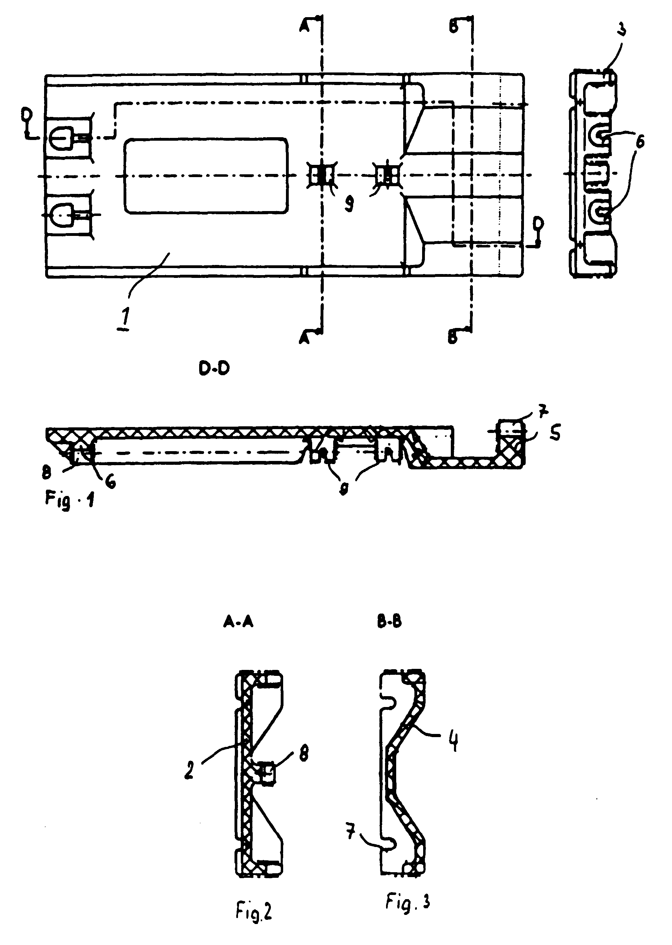

Die Figur 1 zeigt den Isolierträger 1 mit seinem flachbettartigen Kunststoffprofil 2 (Figur 2). Weiterhin ist ersichtlich, daß das flachbettartige Kunststoffprofil 2 mit einer annähernd rechtwinkligen in Längsseitenbegrenzung 3 ausgestattet ist, die dem Isolierträger eine besonders hohe Formstabilität verleiht. Weiterhin ist ersichtlich, daß das Kunststoffprofil 2 im Bereich der angedeuteten Schnittstelle B-B ein zur Längsebene nach innen gekröpftes, an das Außenprofil einer Antriebseinrichtung angepaßtes Umschließungsprofil 4 aufweist, das, wie in Figur 3 dargestellt, trapezförmig ausgebildet ist.
Der Isolierträger 1 enthält außerdem den ersten Befestigungsschenkel 5, der jeweils zwei längsmittensymmetrisch angeordnete erste Schraubenlager 7 aufweist. Die ersten Schraubenlager 7 dienen der Befestigung der Isolierträger an der Außenkontur eines nicht dargestellten Behälters. Weiterhin ist der Isolierträger 1 mit dem zweiten Befestigungsschenkel 6 versehen, der in ähnlicher Weise zwei längsmittensymmetrisch angeordnete weitere Schraubenlager 8 aufweist. Diese Schraubenlager 8 dienen der Befestigung eines ebenfalls nicht dargestellten Radiallagers für die Vakuumschaltröhren, die zwischen den beiden spiegelbildlich angeordneten Isolierträgern 1 gelagert sind. Außerdem ist erkennbar, daß der Isolierträger 1 im Innenbereich längsmittig zwei nebeneinander angeordnete zweite Schraubenlager 9 enthält, die zu den weiteren Schraubenlagern 8 (Fig. 2) um einen rechten Winkel versetzt angeordnet sind. Diese zweiten Schraubenlager 9 dienen ebenfalls der Aufnahme des Lagers der Vakuumschaltröhre zwischen den Isolierträgern 1.

## Patentansprüche

1. Isolierträger für Vakuumschaltröhren mit Antriebseinrichtungen zum Einbau in Schaltanlagen, insbesondere in gasgefüllte Behälter,
**gekennzeichnet durch** die Merkmale:
- der Isolierträger (1) besteht aus einem flachbettartigen Kunststoffprofil (2) mit einer annähernd rechtwinkligen Längsseitenbegrenzung (3),
- das flachbettartige Kunststoffprofil (2) weist an einem ersten mit der Schaltanlage lösbar verbindbaren Ende ein zur Längsebene nach Innen gekröpftes, an das Außenprofil der Antriebseinrichtung der Vakuumschaltröhre angepaßtes Umschließungsprofil (4) auf, daß mit einem zur Längsebene rechtwinklig verlaufenden, ersten Befestigungsschenkel (5) abschließt,
- das flachbettartige Kunststoffprofil (2) weist an einem zweiten, mit einem Radiallager der Vakuumschaltröhre lösbar verbindbaren Ende ein zum ersten Befestigungsschenkel (5) entgegengesetzt verlaufenden zweiten Befestigungsschenkel (6) auf, der im Längsmittenbereich des Isolierträgers (1) mit dem flachbettartigen Kunststoffprofil (2) abschließt,
- der erste Befestigungsschenkel (5) weist jeweils zwei längsmittensymmetrisch angeordnete erste Schraubenlager (7) und der zweite Befestigungsschenkel (6) weist jeweils zwei längsmittensymmetrisch angeordnete weitere Schraubenlager (8) auf,
- der Isolierträger (1) weist im Innenbereich längsmittig zwei nebeneinander angeordnete zweite Schraubenlager (9) auf.

2. Isolierträger nach Anspruch 1, **gekennzeichnet durch** das Merkmal:
das Umschließungsprofil (4) ist trapezförmig ausgebildet.

3. Isolierträger (1) nach einem der vorangegangenen Ansprüche 1 und 2, **gekennzeichnet durch** das Merkmal:
die weiteren ersten und die zweiten Schraubenlager (8) und (9) des Isolierträgers (1) sind durch Schraubenschaft halbumschließende Anschlagstücke realisiert.

## Claims

1. Insulating carriers for vacuum switching tubes with driving arrangements for incorporation in switching installations, particularly in gas-filled containers, **characterised by** the following features:
- the insulating carrier (1) consists of a plastic profile (2) of the flat-base type with an approximately right-angled boundary (3) on the longitudinal sides,
- at a first end which can be detachably connected to the switching installation, the plastic profile (2) of the flat-base type has a circumferential profile (4) which is cranked inwards in relation to the longitudinal plane, is adapted to the external profile of the driving arrangement of the vacuum switching tube, and terminates in a first fastening leg (5) extending at right angles in relation to the longitudinal plane,
- the plastic profile (2) of the flat-base type has, at a second end which can be detachably connected to a radial bearing of the vacuum switching tube, a second fastening leg (6) which extends in the opposite direction to the first fastening leg (5) and terminates, in the longitudinal central region of the insulating carrier (1), in the plastic profile (2) of the flat-base type,
- the first fastening leg (5) has, in each case, two first screw-type bearings (7) disposed symmetrically to the longitudinal centre, and the second fastening leg (6) has, in each case, two other screw-type bearings (8) disposed symmetrically to the longitudinal centre,
- in the internal region, the insulating carrier (1) has, in the longitudinal centre, two second screw-type bearings (9) disposed next to one another.

2. Insulating carriers according to claim 1,
**characterised by** the following feature:
the circumferential profile (4) is of trapezoidal construction.

3. Insulating carriers (1) according to one of the preceding claims, 1 and 2, **characterised by** the following feature:
the other first and the second screw-type bearings (8) and (9) of the insulating carrier (1) are embodied by stop pieces which half enclose the screw shaft.

## Revendications

1. Support isolant pour tubes interrupteurs à vide comprenant des dispositifs d'entraînement, pour le montage dans des installations de coupure, notamment dans des cuves remplies de gaz, caractérisé par les dispositions :
- le support isolant est constitué d'une pièce (2) profilée en matière plastique du genre d'un plateau plan, ayant une délimitation (3) du grand côté à peu près par un angle droit.
- la pièce (2) profilée en matière plastique du genre d'un plateau plan comporte, à une première extrémité pouvant être reliée de manière amovible à l'installation de coupure, un profilé (4) de ceinture, qui est coudé vers l'intérieur par rapport au plan longitudinal, qui est adapté au profil extérieur du dispositif d'entraînement du tube interrupteur à vide et qui se termine par une première branche (5) de fixation, qui s'étend à angle droit par rapport au plan longitudinal,
- la pièce (2) profilée en matière plastique du genre d'un plateau plan comporte, à une deuxième extrémité pouvant être reliée de manière amovible à un palier radial du tube interrupteur à vide, une deuxième branche (6) de fixation, qui s'étend en sens contraire de la première branche (5) de fixation et qui se termine, dans la zone médiane longitudinale du support isolant, par la pièce (2) profilée en matière plastique du genre d'un plateau plan,
- la première branche (5) de fixation comporte deux premiers paliers (7) à vis montés de manière symétrique par rapport à la médiatrice du grand côté, et la deuxième branche (6) de fixation comporte deux paliers (8) à vis supplémentaires montés de manière symétrique par rapport à la médiatrice du grand côté,
- le support isolant (1) comporte, dans la zone intérieure, au milieu en longueur, deux deuxièmes paliers (9) à vis montés côte à côte.

2. Support isolant suivant la revendication 1, caractérisé par la disposition :
le profilé (4) de ceinture est réalisé en forme de trapèze.

3. Support isolant (1) isolant suivant l'une des revendications 1 et 2 précédente, caractérisé par la disposition :
les premiers paliers (8) à vis supplémentaires et les deuxièmes paliers (9) à vis du support (1) isolant sont réalisés par des pièces de butée entourant à moitié une tige filetée.
